# EUROPÄISCHE PATENTSCHRIFT

(11) **EP 3 984 049 B1**
(45) Veröffentlichungstag und Bekanntmachung des Hinweises auf die Patenterteilung: **09.10.2024**
(21) Anmeldenummer: 20733921.9
(22) Anmeldetag: 15.06.2020
(51) Int. Cl.: H01F 3/10, H01F 38/02, H02H 9/02, H02H 9/06, H01F 3/12

(54) **SCHUTZVORRICHTUNG**
PROTECTIVE DEVICE
DISPOSITIF DE PROTECTION

(30) Priorität: 17.06.2019 DE 102019116344
(43) Veröffentlichungstag der Anmeldung: 20.04.2022
(73) Patentinhaber: DEHN SE, 92318 Neumarkt i.d. OPf. (DE)
(72) Erfinder: STEHLE, Michael, 92318 Neumark (DE); SCHORK, Franz, 92318 Neumark (DE)
(74) Vertreter: Prinz & Partner mbB
(86) Internationale Anmeldenummer: PCT/EP2020/066523
(87) Internationale Veröffentlichungsnummer: WO 2020/254265

(56) Entgegenhaltungen:
- CH-A5- 666 770
- DE-A1- 102018 103 012
- JP-A- 2005 237 157
- US-A- 3 671 810
- US-A- 4 122 385

## Beschreibung

Die Erfindung betrifft eine Schutzvorrichtung für ein Stromnetz mit einer Drossel.

Drosseln kommen üblicherweise sowohl bei Überspannungsschutzvorrichtungen als auch bei Kurzschlussschutzvorrichtungen zum Einsatz, um eine Impedanz bereitzustellen, die einen sicheren Betrieb garantiert.

Aus der US 3 671 810 A ist zum Beispiel eine Drossel bekannt, die einen magnetisierbaren Ringkern, einen Permanentmagneten und eine auf dem Ringkern angeordnete Wicklung aufweist. Dabei wird der Ringkern durch den Permanentmagnet magnetisch gesättigt, falls kein Strom von einer Spannungsquelle zu einer Last fließt.

Außerdem offenbart die CN 109 378 812 A eine Drossel, die einen ferromagnetischen Kern und drei Permanentmagnete aufweist, die in entsprechenden Spalten im Kern angeordnet sind. Der Kern hat drei Schenkel und um einen der Schenkel ist eine Spule gewickelt. Weiterhin zeigt die DE 15 38 014 A einen Sättigungsstromwandler, der eine Primärwicklung, eine Sekundärwicklung und zwei Zweige aufweist. Einer der Zweige hat dabei zwei Luftspalte.

Aus der DE 10 2018 103 012 A1 ist eine Schaltungsanordnung für einen kombinierten Schutz einer Last vor temporären und transienten Überspannungen bekannt.

In der US 4 122 385 A und US 3 671 810 A ist jeweils ein Strombegrenzer beschrieben, der Schaltelemente vor einem Überstrom schützen soll.

In der JP 2005-237157 A ist ein Überspannungsschutzgerät bekannt, das zum Blitzschutz vorgesehen ist.

In bekannten Überspannungsschutzvorrichtungen mit einem Grobschutz und einem Feinschutz dient die von der Drossel bereitgestellte Impedanz dazu, den Grobschutz und den Feinschutz zu koordinieren und wird als Entkopplungselement bezeichnet.

Beispielsweise ist aus der WO 2018/192 713 A1 eine Überspannungsschutzvorrichtung bekannt, die eine stromkompensierte Drossel, einen Gasentladungsableiter sowie eine Schalteinrichtung hat. Dabei bildet der Gasentladungsableiter den Grobschutz und die Schalteinrichtung den Feinschutz der Überspannungsschutzvorrichtung.

In einer Kurzschlussschutzvorrichtung dient die Impedanz der Drossel dazu, die Stromanstiegsrate zu begrenzen, um eine sichere Unterbrechung des Stromkreises zu ermöglichen.

Die CH 666 770 A5 zeigt beispielhaft eine Kurzschlussschutzvorrichtung, die eine Drossel, einen Leistungsschalter und einen Verbraucher aufweist. Die Drossel hat einen ferromagnetischen Kern, zwei Permanentmagnete und zwei Drosselspulen. Dabei sind die Permanentmagnete in entsprechenden Spalten des Kerns angeordnet und so bemessen, dass die von den Drosselspulen umwickelten Schenkel im stromlosen Zustand oder bei nur normalen Betriebsströmen in den Drosselspulen magnetisch gesättigt sind.

Drosseln verursachen jedoch während des normalen Betriebs des jeweiligen Stromnetzes einen Spannungsabfall und somit unerwünschte Blindleistungen im Energieverteilungsnetz. Außerdem ergibt sich bei Gleichstromnetzen mit puffernden Leitungskapazitäten die Gefahr von L-C-Serienresonanzen. In Signalübertragungsstrecken beeinflusst die eingebaute Induktivität das Übertragungsverhalten und ist somit als Entkopplungselement nicht einsetzbar. Hier werden üblicherweise ohmsche Entkopplungselemente gewählt.

Es ist daher Aufgabe der Erfindung, eine Schutzvorrichtung bereitzustellen, die diese Nachteile im Normalbetrieb des Stromnetzes nicht aufweist.

Die Aufgabe wird gelöst durch eine Schutzvorrichtung für ein Stromnetz, mit wenigstens einer variablen Drossel, die einen Leiter mit wenigstens einer Windung und einen Kern aufweist, der zumindest abschnittweise innerhalb der wenigstens einen Windung angeordnet ist. Der Kern weist einen weichmagnetischen Teil und wenigstens einen Quellmagnet auf, wobei der Quellmagnet derart ausgebildet ist, dass er den weichmagnetischen Teil in eine Vormagnetisierungsrichtung vormagnetisiert. Die Schutzvorrichtung ist eine Überspannungsschutzvorrichtung, die einen Grobschutz und einen Feinschutz aufweist. Die variable Drossel ist zwischen dem Grobschutz und dem Feinschutz angeordnet, sodass die Drossel den Grobschutz und den Feinschutz koordinieren kann. Die Schutzvorrichtung weist zwei variable Drosseln auf, wobei die Funktionsstromrichtungen der beiden variablen Drosseln gegenläufig sind, um sowohl für positive als auch negative Überspannungen oder Ströme Schutz zu bieten. Jede der zwei variablen Drosseln hat eine vorgesehene Funktionsstromrichtung eines Stroms durch den Leiter, wobei der Quellmagnet derart angeordnet ist, dass die Vormagnetisierungsrichtung entgegen einer Strommagnetfeldrichtung verläuft. Die Strommagnetfeldrichtung ist dabei die Richtung eines Strommagnetfelds, das von einem in Funktionsstromrichtung durch die wenigstens eine Windung fließenden Strom erzeugt wird.

Daher führt ein Strom in Funktionsstromrichtung zunächst nicht zu einer Änderung der Magnetisierung des weichmagnetischen Teils, sodass ein Betriebsbereich für den Normalbetrieb definiert ist.

Zum Beispiel weist der Grobschutz eine Funkenstrecke, wie einen Gasableiter, auf. Der Feinschutz kann eine Suppressordiode, einen Varistor und/oder ein leistungselektronisches Bauelement, wie einen IGBT (Bipolartransistor mit isolierter Gate-Elektrode), einen MOSFET (Metall-Oxid-Halbleiter-Feldeffekttransistor) oder einen Thyristor aufweisen.

Dadurch, dass die weichmagnetischen Teile vormagnetisiert sind, führt ein Strom durch die Drossel nicht zu einer starken Magnetisierung, sodass die Drossel im Normalbetrieb wie eine Luftdrossel mit vernachlässigbarer Impedanz wirkt (µ = µ₀). Dadurch entstehen im Normalbetrieb keine nennenswerten Verluste oder Resonanzen, die ein Stromnetz, insbesondere ein Gleichstromnetz stören könnten. Weiterhin werden bei Signalübertragungsnetzen bzw. -strecken die Übertragungseigenschaften nicht negativ beeinflusst.

Unter einer variablen Drossel wird allgemein und unabhängig von der jeweiligen Anwendung im Rahmen dieser Erfindung eine variable Induktivität verstanden. In anderen Worten also ein Bauteil, dessen Induktivität sich in Abhängigkeit von Umgebungsparametern definiert ändert.

Im Rahmen der Erfindung werden unter einem Stromnetz sowohl Energieverteilungsnetze als auch Signalübertragungsnetze bzw. Signalübertragungsstrecken verstanden.

Jede der variablen Drosseln und die Schutzvorrichtungen sind zum Beispiel für Niederspannungen ausgelegt. Jede der variablenie Drosseln sind insbesondere passiv.

Jede der variablen Drosseln kann mehrere Quellmagneten aufweisen, wobei die Wirkung der Quellmagnete dann zusammen als effektiv ein Quellmagnet zu betrachten ist.

Zum Beispiel ist der Kern und/oder das weichmagnetische Teil mehrteilig.

Beispielsweise weist der weichmagnetische Teil einen Windungsabschnitt auf, der innerhalb der wenigstens einen Windung angeordnet ist, wobei der Quellmagnet derart ausgebildet ist, dass er den Windungsabschnitt vormagnetisiert, insbesondere bis zur magnetischen Sättigung vormagnetisiert, wodurch Änderungen der Magnetisierung des weichmagnetischen Teils im normalen Betrieb verhindert werden.

In einer Ausgestaltung verläuft die Vormagnetisierungsrichtung jeder der variablen Drosseln innerhalb des Windungsabschnittes entgegen der Strommagnetfeldrichtung. Zum Beispiel ist das weichmagnetische Material in Sättigung, sofern sich der Strom durch den Leiter in Funktionsstromrichtung innerhalb oder unterhalb des Nennstrombereichs der Drossel bzw. des Stromnetzes befindet.

Die Strommagnetfeldrichtung ist somit durch die Funktionsstromrichtung und die Wicklungsrichtung vorgegeben

Um die Funktion einer üblichen Drossel bei hohen Strömen definiert wahrzunehmen, kann jede der zwei variablen Drosseln eine vorbestimmte Schwellstromstärke eines Stroms durch die wenigstens eine Windung, insbesondere in Funktionsstromrichtung haben. Der Quellmagnet ist derart ausgebildet, dass die Vormagnetisierung des weichmagnetischen Teils, insbesondere des Windungsabschnittes, gleich einem Strommagnetfeld innerhalb der wenigstens einen Windung ist, das von einem durch die wenigstens eine Windung mit der Schwellstromstärke fließenden Stroms erzeugt wird. Insbesondere ist die Magnetstärke des Quellmagneten entsprechend gewählt, um die gewünschte Schwellstromstärke zu erreichen. Ströme größer als die Schwellstromstärke führen daher zu einer Ummagnetisierung des weichmagnetischen Kerns und somit zu einer höheren Impedanz der Drossel. In anderen Worten wird der weichmagnetische Kern aus der Sättigung getrieben.

Zum Beispiel definiert die Schwellstromstärke die obere Grenze eines normalen Betriebsbereiches der Drossel.

In einer Ausführungsform hat jede der zwei variablen Drosseln eine vorbestimmte Maximalstromstärke eines Stroms durch die wenigstens eine Windung, insbesondere in Funktionsstromrichtung. Der Quellmagnet ist derart ausgebildet, dass er einem Maximalmagnetfeld am Quellmagnet standhält, das von einem durch die wenigstens eine Windung mit der Maximalstromstärke fließenden Strom erzeugt wird. Durch eine hohe Maximalstromstärke kann verhindert werden, dass es zu Funktionsverlusten der Drossel nach einem Einsatz kommt.

Die Maximalstromstärke ist insbesondere größer als die Schwellstromstärke.

Beispielsweise ist der weichmagnetische Teil jeder der zwei variablen Drosseln aus einem weichmagnetischen Material, insbesondere aus Elektroblech, Ferrit, amorphem Eisen und/oder nanokristallinem Eisen, wodurch der weichmagnetische Teil leicht herzustellen ist.

Der weichmagnetische Teil kann aus einem Elektroblech, insbesondere einem FeSi-Elektroblech, oder einem Ferritpulverkern sein.

In einer Ausgestaltung ist der Quellmagnet jeder der zwei variablen Drosseln ein Permanentmagnet aus magnetisiertem hartmagnetischem Material, insbesondere ein Stahlmagnet, ein Ferritmagnet, ein Alnico-Magnet, ein Samarium-Cobalt-Magnet und/oder ein Neodym-Eisen-Bor-Magnet. Dadurch lässt sich eine passive variable Drossel einfach realisieren.

Denkbar ist selbstverständlich auch, dass der Quellmagnet ein Elektromagnet ist, wodurch zum Beispiel die Schwellstromstärke variiert werden kann.

Um eine gute Vormagnetisierung des Windungsabschnitts zu erreichen, kann der Kern jeder der zwei variablen Drosseln eine Ringform aufweisen, insbesondere wobei die wenigstens eine Windung und der wenigstens eine Quellmagnet entgegengesetzt zueinander angeordnet sind.

In einer Ausführungsform weist der weichmagnetische Teil jeder der zwei variablen Drosseln wenigstens einen Luftspalt auf, wobei der Quellmagnet im Luftspalt angeordnet ist, wodurch eine kompakte Drossel erzielt wird.

Denkbar ist auch, dass der Quellmagnet außen um einen Quellabschnitt des weichmagnetischen Teils angeordnet ist, um einen durchgehend weichmagnetischen Teil verwenden zu können.

Beispielsweise weist der Kern jeder der zwei variablen Drosseln einen Bypass auf, insbesondere wobei im Bypass ein Luftspalt vorgesehen ist, wodurch die Maximalstromstärke erhöht werden kann.

Das Stromnetz kann ein Gleichstromnetz, ein Signalübertragungsnetz oder eine Signalübertragungsstrecke sein.

Die im Zusammenhang mit der variablen Drossel genannten Vorteile und Merkmale gelten gleichermaßen für die Schutzvorrichtung und umgekehrt.

Wenigstens eine der zwei variablen Drosseln ist insbesondere so angeordnet, dass ihre Funktionsstromrichtung mit der vorgesehenen Betriebsstromrichtung des Stromnetzes zusammenfällt.

In einer Ausgestaltung ist die Schutzvorrichtung auch eine Kurzschlussschutzvorrichtung, die eine Trenneinheit, insbesondere eine leistungselektronische Trenneinheit aufweist, die in Reihe mit den zwei variablen Drosseln geschaltet ist, sodass die Drossel die Stromanstiegsrate begrenzen kann.

Die Schutzvorrichtung ist dann eine kombinierte Überspannungs- und Kurzschlussschutzvorrichtung.

Mit anderen Worten hat die Schutzvorrichtung also eine Überspannungsschutzvorrichtung und eine Kurzschlussschutzvorrichtung.

Insbesondere ist ein der zwei variablen Drosseln oder jede der zwei variablen Drosseln sowohl Teil der Überspannungsschutzvorrichtung als auch Teil der Kurzschlussschutzvorrichtung. Auf diese Weise wird die Anzahl an benötigten Drosseln in einem Stromnetz reduziert.

Beispielsweise sind die Überspannungsschutzvorrichtung und die Kurzschlussschutzvorrichtung in einem gemeinsamen Gehäuse angeordnet.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 ein Blockschaltbild einer erfindungsgemäßen Schutzvorrichtung mit zwei Drosseln,
- die Figuren 2a bis 2d eine der Drosseln gemäß Figur 1 in Detailansicht in verschiedenen Betriebszuständen,
- die Figuren 3a bis 3d verschiedene Ausführungsformen einer Drossel gemäß Figur 1, und
- Figur 4 ein Blockschaltbild einer zweiten Ausführungsform einer Schutzvorrichtung.

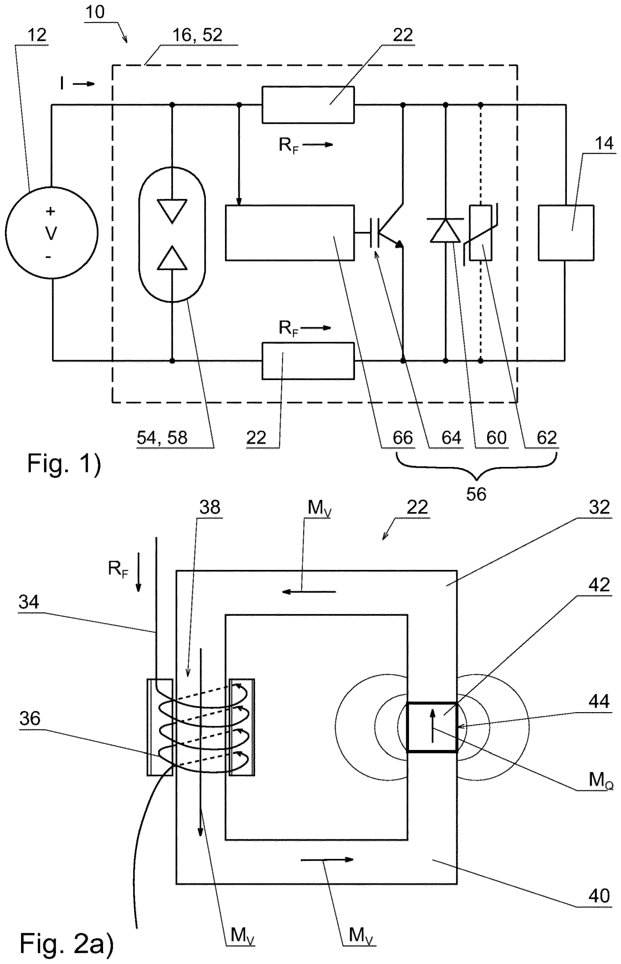

In Figur 1 ist ein Stromnetz 10 mit einer Stromquelle 12, einer Last 14 und einer erfindungsgemäßen Schutzvorrichtung 16 als Blockschaltbild dargestellt.

Bei dem Stromnetz 10 handelt es sich um ein unipolares Gleichstromnetz.

Dementsprechend ist die Stromquelle 12 eine Gleichstromquelle und die Last 14 benötigt Gleichstrom.

Selbstverständlich kann das Stromnetz 10 auch ein mehrpolares Gleichstromnetz sein.

Die Schutzvorrichtung 16 ist zwischen der Stromquelle 12 und der Last 14 angeordnet.

Bei der Schutzvorrichtung 16 der ersten Ausführungsform handelt es sich um eine Überspannungsschutzvorrichtung 52, die neben variablen Drosseln 22 einen Grobschutz 54 und einen Feinschutz 56 aufweist. Der Schutzpegel des Grobschutzes 54 ist deutlich größer als der Schutzpegel des Feinschutzes 56.

Der Grobschutz 54 weist beispielsweise eine Funkenstrecke 58, wie einen Gasableiter auf.

Der Feinschutz 56 kann passiv sein und eine Suppressordiode 60 oder, in Figur 1 gestrichelt dargestellt, einen Varistor 62 aufweisen.

Denkbar ist auch, dass der Feinschutz 56 aktiv ausgeführt ist und ein leistungselektronisches Bauelement 64, wie einen IGBT, einen MOSFET oder einen Thyristor mit entsprechender Ansteuerung 66 aufweist.

Der Aufbau der beiden variablen Drosseln 22 ist identisch und die Drosseln 22 haben eine Funktionsstromrichtung R_{F}. Die Drosseln 22 sind so angeordnet, dass ihre Funktionsstromrichtungen R_{F} gegenläufig sind.

Anhand einer in Figur 2a dargestellten beispielhaften Drossel 22 wird der Aufbau beschrieben.

Die Drossel 22 weist einen Kern 32 und einen Leiter 34 auf, der mit mehreren Windungen 36 um den Kern 32 gewickelt ist und somit eine Spule bildet.

Denkbar ist auch, dass die Spule auf den Kern 32 aufsteckbar ist.

Der Abschnitt des Kerns 32, der von den Windungen 36 umgeben ist, wird als Windungsabschnitt 38 bezeichnet.

Der Kern 32 ist aus wenigstens zwei Teilen und weist einen weichmagnetischen Teil 40 und einen Quellmagneten 42 auf.

Der weichmagnetische Teil 40 ist aus einem weichmagnetischen Material, wie einem Elektroblech, Ferrit, amorphem Eisen oder nanokristallinem Eisen. Zum Beispiel ist der weichmagnetische Teil 40 ein Ferritpulverkern.

Der weichmagnetische Teil 40 hat eine Ringform, im ersten Ausführungsbeispiel mit rechteckigen bzw. quadratischen Konturen und kann aus mehreren Teilen bzw. Teilstücken zusammengesetzt sein.

Der weichmagnetische Teil 40 weist einen Luftspalt 44 auf, insbesondere an einer den Windungen 36 entgegengesetzten, d.h. diametral gegenüberliegenden, Stelle der Ringform.

Im Luftspalt 44 ist der Quellmagnet 42 angeordnet, der im gezeigten Ausführungsbeispiel ein Permanentmagnet aus magnetisiertem hartmagnetischem Material ist.

Zum Beispiel ist der Quellmagnet 42 ein Stahlmagnet, ein Ferritmagnet, ein Alnico-Magnet, ein Samarium-Cobalt-Magnet und/oder ein Neodym-Eisen-Bor-Magnet.

Dementsprechend liegt auch der Quellmagnet 42 zu den Windungen 36, d. h. zur Spule entgegengesetzt.

Zum Beispiel füllt der Quellmagnet 42 den Luftspalt 44 völlig aus, sodass der Kern 32 in sich geschlossen ist.

Der Quellmagnet 42 besitzt eine Magnetisierung mit einer Magnetisierungsrichtung, die im Folgenden als Quellmagnetisierungsrichtung M_{Q} bezeichnet wird.

Aufgrund der Magnetisierung des Quellmagneten 42 bzw. seines Magnetfeldes wird auch der weichmagnetische Teil 40 des Kerns 32 magnetisiert, wobei im Folgenden zur besseren Unterscheidung von "Vormagnetisierung" gesprochen wird.

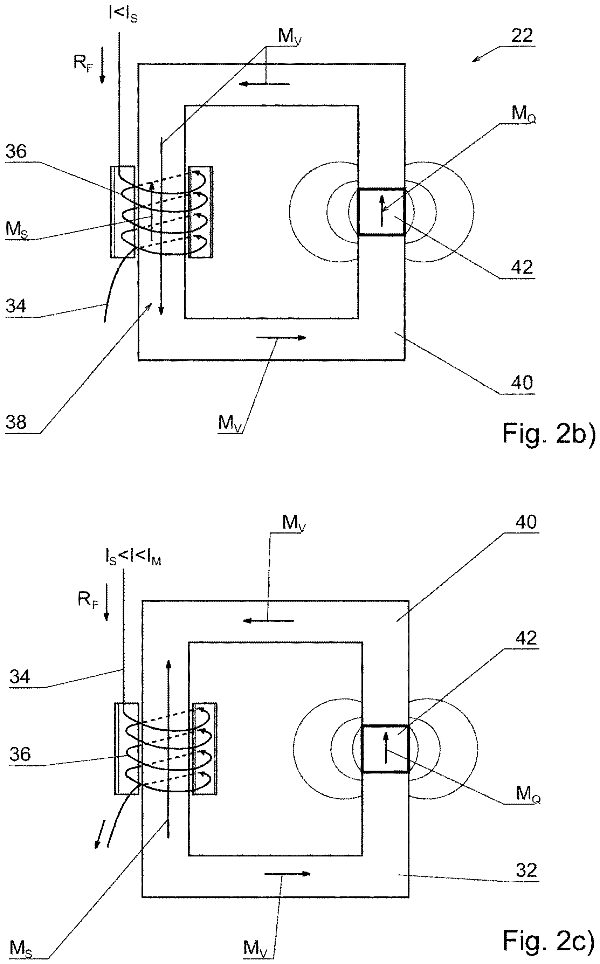

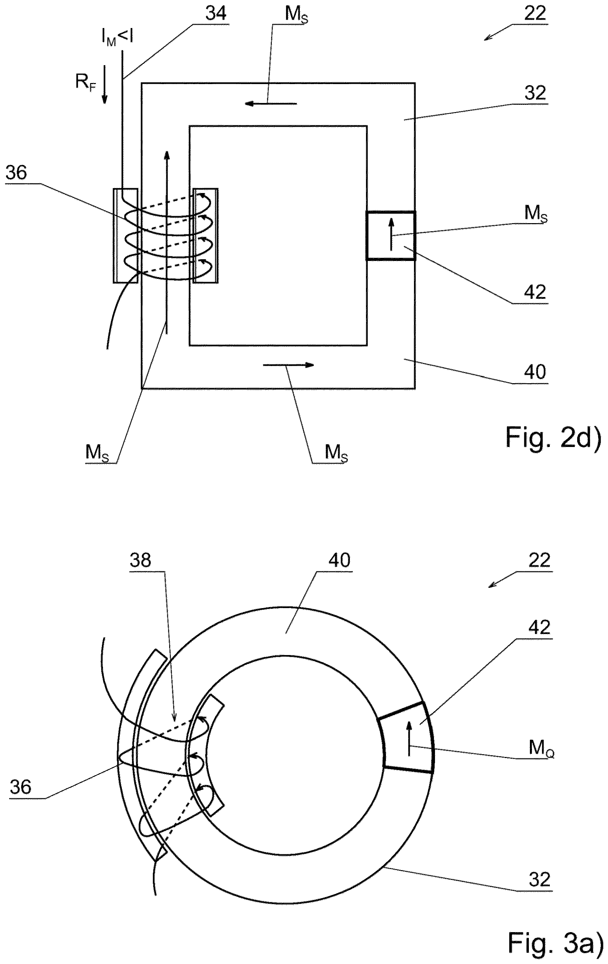

Die Vormagnetisierung hat eine Vormagnetisierungsrichtung Mv, die im Bereich des Quellmagneten 42 mit der Quellmagnetisierungsrichtung M_{Q} übereinstimmt und in der Darstellung gemäß Figur 2 entgegen dem Uhrzeigersinn verläuft.

Der Quellmagnet 42 bzw. seine Magnetisierung ist dabei derart stark, dass der gesamte weichmagnetische Teil 40, insbesondere der Windungsabschnitt 38 des weichmagnetischen Teils 40 bzw. des Kerns 32 vormagnetisiert wird.

Zum Beispiel ist der Quellmagnet 42 so stark magnetisiert, dass er den weichmagnetischen Teil 40 vollständig sättigen kann. Dies bedeutet, dass der weichmagnetische Teil 40 seine Sättigungsmagnetisierung zumindest im Windungsabschnitt 38, insbesondere jedoch überall erreicht hat.

Die Drossel 22 hat somit unterschiedliche Eigenschaften für verschiedene Stromrichtungen, wobei die Drossel 22 nur in eine der Stromrichtungen, im Rahmen dieser Erfindung Funktionsstromrichtung R_{F} genannt, als variable Impedanz wirkt.

Die Funktionsstromrichtung R_{F} hängt von der Vormagnetisierungsrichtung M_{V} und somit der Quellmagnetisierungsrichtung M_{Q} und der Richtung der Windungen 36 um den Kern 32 ab.

Die Funktionsstromrichtung R_{F} ist diejenige Stromrichtung durch den Leiter 34 bzw. die Windungen 36, die zu einem durch den Strom induzierten Magnetfeld innerhalb der Windungen 36 - im Folgenden Strommagnetfeld genannt - führt, dessen Richtung - im Folgenden Strommagnetfeldrichtung Ms - zur Vormagnetisierungsrichtung Mv gegenläufig ist.

In anderen Worten wirkt im Windungsabschnitt 38 das durch den Strom induzierte Magnetfeld dem vom Quellmagneten 42 erzeugten Magnetfeld entgegen, sofern der Strom in die Funktionsstromrichtung R_{F} fließt.

In den Figuren 2a bis 2d verläuft die Funktionsstromrichtung R_{F} von oben nach unten.

Aufgrund der Vormagnetisierungsrichtung M_{V} ist der ansonsten symmetrische Aufbau der Drossel 22 nicht mehr symmetrisch, da ein durch den Leiter 34 und damit die Windungen 36 fließender Strom ein Magnetfeld entgegen der Vormagnetisierungsrichtung Mv oder mit der Vormagnetisierungsrichtung Mv erzeugt.

In Figur 2a ist der stromlose Zustand der variablen Drossel 22 dargestellt und die Figuren 2b bis 2d zeigen verschiedene weiterer bestromte Zustände der Drossel 22.

In Figur 2b ist der Betriebszustand dargestellt, in dem ein für das Stromnetz 10 üblicher Betriebsstrom (Nennstrom) in Funktionsstromrichtung R_{F} fließt.

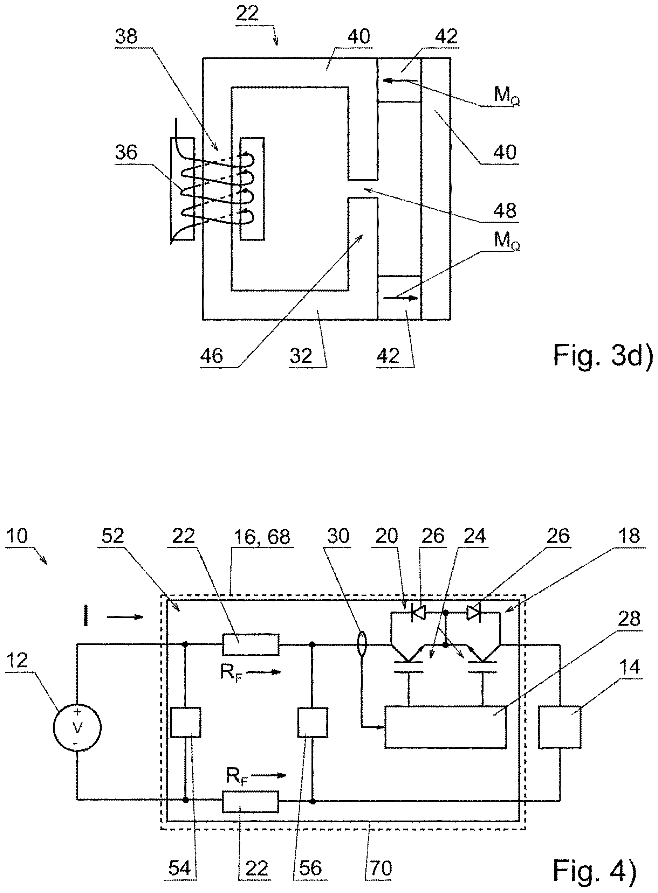

In der in Figur 4 oberen der gezeigten Drosseln 22 erzeugt der Nennstrom somit ein Strommagnetfeld entgegen der Vormagnetisierung des weichmagnetischen Teils 40, wobei der Quellmagnet 42 jedoch so stark gewählt ist, dass die Vormagnetisierung durch das Strommagnetfeld nicht überwunden werden kann.

Dadurch ändert sich die Magnetisierung des weichmagnetischen Teils 40 nicht, sodass die durch die Windungen 36 erzeugte Spule in diesem Falle wie eine Luftspule mit sehr geringer Induktivität wirkt.

Im ordnungsgemäßen Betrieb des Stromnetzes bei Nennstromstärken hat die Drossel 22 somit eine geringe Induktivität, vergleichbar mit einer Luftspule, sodass störende Effekte wie ein Spannungsabfall oder das Auftreten von Resonanzen zuverlässig vermieden werden können.

In der in Figur 1 unten dargestellten Drossel 22 läuft der Nennstrom entgegen der Funktionsstromrichtung R_{F} und erzeugt ein Magnetstromfeld in Vormagnetisierungsrichtung Mv, sodass auch in diesem Falle die Magnetisierung des Kerns 32 nicht verändert wird. Somit wirkt die Drossel 22 auch für Ströme entgegen der Funktionsstromrichtung R_{F} als geringe Induktivität, vergleichbar mit einer Luftspule mit den Windungen 36.

Die Schwellstromstärke Is ist eine Eigenschaft der Drossel 22 und hängt sowohl von der Anzahl der Windungen 36 als auch von der Stärke der Vormagnetisierung und damit vom Quellmagneten 42 ab.

Die Schwellstromstärke Is ist diejenige Stromstärke, bei der das vom Strom erzeugte Strommagnetfeld genauso groß ist wie die Vormagnetisierung des weichmagnetischen Teils 40, sodass die Magnetisierung des weichmagnetischen Teils 40 nun vom Strommagnetfeld verändert werden kann.

Bei Strömen I höher als die Schwellstromstärke I_{S} wird ein Strommagnetfeld erzeugt, das die Magnetisierung des weichmagnetischen Teils 40 ändert.

Die durch die Windungen 36 gebildete Spule wirkt somit nicht mehr wie eine Luftspule, sondern wie eine übliche Spule mit Kern (siehe Figur 2c).

Dadurch steigt die Induktivität und somit die Impedanz der Drossel 22 mit Überschreiten der Schwellstromstärke ls ebenfalls schlagartig an. Aufgrund der von der Stromstärke abhängigen Impedanz ist die Drossel 22 als variable Drossel anzusehen.

Die Drosseln 22 sind - mit gegenläufigen Funktionsstromrichtungen R_{F} - zwischen dem Pluspol bzw. dem Minuspol der Stromquelle 12 und der Last 14 angeordnet, nämlich zwischen dem Grobschutz 54 und dem Feinschutz 56.

Während des normalen Betriebs liegen lediglich Ströme in bzw. gegen eine Funktionsstromrichtung R_{F} unterhalb einer Schwellstromstärke I_{S} an den beiden variablen Drosseln 22 an, sodass diese keine nennenswerte Impedanz darstellen.

Beim Auftreten einer Überspannung, beispielsweise bei einem Blitzeinschlag, löst, aufgrund des geringeren Schutzpegels, zunächst der Feinschutz 56 aus und erzeugt hohe Ströme I durch die Drosseln 22.

Dadurch wird - abhängig vom Einschlagort des Blitzes - bei einer der Drosseln 22 die Schwellstromstärke ls in Funktionsstromrichtung R_{F} überschritten, sodass die Impedanz dieser Drossel 22 stark ansteigt und eine Gegenspannung induziert wird. Durch die Gegenspannung wird die Spannungsdifferenz über den Grobschutz 54 weiter vergrößert, sodass dieser zuverlässig auslöst. Auf diese Weise wird eine Entlastung des strombelasteten Feinschutzes 56 bereitgestellt.

Die Funktion der unteren Drossel 22 zwischen der Last 14 und dem Minuspol der Stromquelle 12 dient dazu, eine Impedanz bei negativen Spannungspulsen und somit negativen Strömen bereitzustellen. Diese Drossel 22 ist optional.

Neben der Schwellstromstärke I_{S} weist die variable Drossel 22 noch eine weitere, betriebsrelevante Stromstärke auf, nämlich die Maximalstromstärke I_{M}.

Die Maximalstromstärke I_{M} ist diejenige Stromstärke I in Funktionsstromrichtung R_{F}, bei der das Strommagnetfeld so groß wird, dass es der Quellmagnetisierung des Quellmagneten 42 am Quellmagneten 42 entspricht. Das Magnetfeld wird im Rahmen dieser Erfindung als Maximalmagnetfeld bezeichnet.

Bei Stromstärken I oberhalb der Maximalstromstärke I_{M} wird die Magnetisierung des Quellmagneten 42 durch das Strommagnetfeld verringert, sodass der Quellmagnet 42 seine vorgesehene Funktion verliert.

In anderen Worten ist die Maximalstromstärke I_{M} diejenige Stromstärke, bei der ein Maximalmagnetfeld entsteht, dem der Quellmagnet bzw. die Magnetisierung des Quellmagneten 42 noch standhält. Die Maximalstromstärke I_{M} ist selbstverständlich deutlich größer als die Schwellstromstärke ls.

In Figur 2d ist ein Zustand dargestellt, in dem die Stromstärke I die Maximalstromstärke I_{M} überschreitet, sodass der Quellmagnet 42 keine Vormagnetisierung und damit Vormagnetisierungsrichtung M_{V} aufweist.

In den Figuren 3a bis 3d sind verschiedene weitere Ausführungsformen der Drossel 22 dargestellt.

Die variablen Drosseln 22 der weiteren Ausführungsformen entsprechen jedoch der der ersten Ausführungsform, sodass im Folgenden lediglich auf die Unterschiede eingegangen wird und gleiche und funktionsgleiche Teile mit denselben Bezugszeichen versehen sind.

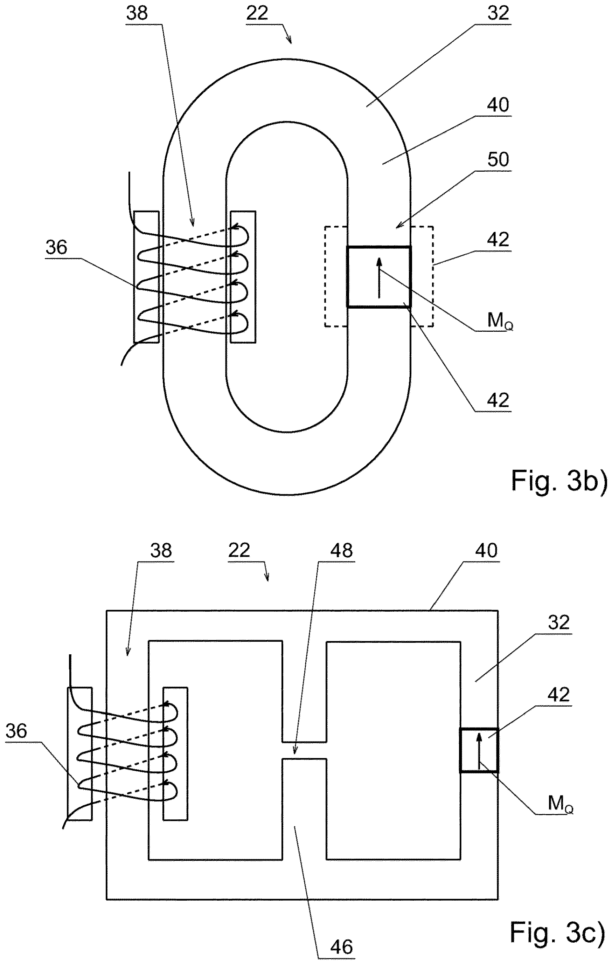

Die Drossel gemäß Figur 3a hat einen kreisförmigen Kern 32 und die Drossel gemäß Figur 3b hat eine Ringform, die rennbahnförmig ist.

Auch in diesen beiden Ausführungsformen sind die Windungen 36 entgegengesetzt zum Quellmagneten 42 angeordnet, sodass der Abstand durch den Kern 32 zwischen dem Windungsabschnitt 38 und dem Quellmagneten 42 möglichst groß ist. Dies vergrößert die Maximalstromstärke I_{M}.

Selbstverständlich ist es denkbar, dass der Quellmagnet 42 nicht in einem Spalt des weichmagnetischen Teils 40 angeordnet ist, sondern in einem Abschnitt außen um den weichmagnetischen Teil 40 angeordnet ist. Dieser Abschnitt wird dann Quellabschnitt 50 genannt und ist in Figur 3b gestrichelt angedeutet.

Im in Figur 3c gezeigten Ausführungsbeispiel weist der Kern einen Bypass 46 auf, der sich parallel zum Windungsabschnitt 38 und zum Quellmagneten 42 erstreckt.

Beispielsweise weist der Bypass 46 einen Luftspalt 48 auf, der jedoch optional ist.

Durch den Bypass 46 kann die Maximalstromstärke I_{M} weiter erhöht werden, da der Magnetfluss des Strommagnetfelds bei großen Strömen durch den Bypass 46 kurzgeschlossen wird. Der Luftspalt 48 trägt ebenfalls zur Erhöhung der Maximalstromstärke I_{M} bei.

Die Ausführungsform gemäß Figur 3d entspricht der Ausführungsform gemäß Figur 3c, wobei mehrere Quellmagneten 42 vorgesehen sind, deren Vormagnetisierungsrichtungen sich ergänzen.

Die mehreren Quellmagnete 42 wirken zusammen wie ein einzelner Quellmagnet 42, sodass die Funktionsweise nicht von der zuvor beschriebenen Funktionsweise abweicht.

Denkbar ist selbstverständlich auch, dass kein Permanentmagnet als Quellmagnet 42 verwendet wird, sondern ein Elektromagnet, wodurch die variable Drossel 22, insbesondere die Schwellstromstärke Is flexibel eingestellt werden kann.

In Figur 4 ist eine zweite Ausführungsform der Schutzvorrichtung 16 dargestellt, die teilweise der Schutzvorrichtung 16 gemäß der ersten Ausführungsform entspricht. Im Folgenden wir daher lediglich auf die Unterschiede eingegangen und gleiche und funktionsgleiche Teile sind mit demselben Bezugszeichen versehen.

In der Ausführungsform der Figur 4 ist die Schutzvorrichtung 16 eine kombinierte Überspannungs- und Kurzschlussschutzvorrichtung 68, d.h. sowohl eine Kurzschlussschutzvorrichtung 18 als auch eine Überspannungsschutzvorrichtung 52.

Die Überspannungsschutzvorrichtung 52 der Schutzvorrichtung 16 der zweiten Ausführungsform entspricht der Überspannungsschutzvorrichtung 52 der Figur 1.

Zum Beispiel sind die Kurzschlussschutzvorrichtung 18 und die Überspannungsschutzvorrichtung 52 in einem gemeinsamen Gehäuse 70 der Schutzvorrichtung 16 angeordnet.

Die Kurzschlussschutzvorrichtung 18 weist eine Trenneinheit 20 auf.

Die Trenneinheit 20 ist eine bekannte Trenneinheit und weist im gezeigten Ausführungsbeispiel zwei leistungselektronische Bauelemente 24, je eine Freilaufdiode 26, eine Steuereinheit 28 und einen Stromsensor 30 auf.

Die leistungselektronischen Bauelemente 24 sind beispielsweise IGBTs, MOSFETs oder Thyristoren.

Denkbar ist selbstverständlich auch, dass die Trenneinheit 20 in bekannter Weise mechanisch ausgeführt ist.

Eine der variablen Drosseln 22 ist zwischen dem Pluspol der Stromquelle 12 und der Trenneinheit 20 angeordnet und die andere der variablen Drosseln 22 ist zwischen der Last 14 und dem Minuspol der Stromquelle 12 angeordnet.

Die variablen Drosseln 22 sind dabei dieselben, die in der Überspannungsschutzvorrichtung 52 verwendet und zur ersten Ausführungsform beschrieben sind. Jede der variablen Drosseln 22 ist somit sowohl Teil der Kurzschlussschutzvorrichtung 18 der als auch Teil der Überspannungsschutzvorrichtung 52.

Denkbar ist selbstverständlich auch, dass die variablen Drosseln 22 direkt hintereinander gegensinnig in Serie geschaltet in einem Leiter angeordnet sind. Dies macht schaltungstechnisch weder im Überspannungs- noch im Überstromschutz einen Unterschied. Die gemeinsame Anordnung im Hinleiter beeinträchtig schaltungstechnisch nicht das Potential am Rückleiter, wenn dieser z.B. als gemeinsamer Neutralleiter ausgeführt sein soll, und umgekehrt.

Im Falle eines Kurzschlusses in der Last 14 steigt der Strom I in Funktionsstromrichtung R_{F} der oberen Drossel 22 jedoch stark an, sodass er eine Schwellstromstärke I_{S} überschreitet.

Im Falle eines Kurzschlusses im in Figur 4 gezeigten Stromnetz 10 überschreitet die Stromstärke I in Funktionsstromrichtung R_{F} der oberen Drossel 22 zwischen dem Pluspol der Stromquelle 12 und der Last 14 sehr rasch die Schwellstromstärke I_{S}. Die obere variable Drossel 22 ist dann nicht mehr als vernachlässigbare Induktivität anzusehen, sondern stellt nun eine signifikante Impedanz dar. Die Impedanz der Drossel 22 verringert nun die Stromanstiegsrate, sodass der Strom durch die Trenneinheit 20 sicher abgeschaltet werden kann.

Auf diese Weise kann die Stromanstiegsrate im Kurzschlussfall effektiv verringert werden, um ein sicheres Abschalten zu ermöglichen, wobei jedoch im regulären Betrieb das Stromnetz 10 nicht mit einer nennenswerten Impedanz belastet wird.

Die Drosseln 22 wirken also sowohl im Falle eines Kurzschlusses als auch im Falle einer Überspannung.

## Patentansprüche

1. Schutzvorrichtung für ein Stromnetz (10) mit wenigstens einer variablen Drossel (22), die einen Leiter (34) mit wenigstens einer Windung (36) und einen Kern (32) aufweist, der zumindest abschnittweise innerhalb der wenigstens einen Windung (36) angeordnet ist,
wobei der Kern (32) einen weichmagnetischen Teil (40) und wenigstens einen Quellmagnet (42) aufweist,
wobei der Quellmagnet (42) derart ausgebildet ist, dass er den weichmagnetischen Teil (40) in eine Vormagnetisierungsrichtung (Mv) vormagnetisiert,
wobei die Schutzvorrichtung (16) eine Überspannungsschutzvorrichtung (52) ist, die einen Grobschutz (54) und einen Feinschutz (56) aufweist, und
wobei die variable Drossel (22) zwischen dem Grobschutz (54) und dem Feinschutz (56) angeordnet ist, **dadurch gekennzeichnet, dass**
die Schutzvorrichtung (16) zwei variable Drosseln (22) aufweist,
wobei jede der zwei variablen Drosseln (22) eine vorgesehene Funktionsstromrichtung (R_{F}) eines Stroms (I) durch den Leiter (34) der jeweiligen variablen Drossel (22) hat,
wobei der Quellmanget (42) der jeweiligen variablen Drossel (22) derart angeordnet ist, dass die Vormagnetisierungsrichtung (Mv) entgegen einer Strommagnetfeldrichtung (Ms) verläuft,
wobei die Strommagnetfeldrichtung (Ms) die Richtung eines Strommagnetfelds ist, das von einem in der Funktionsstromrichtung (R_{F}) durch die wenigstens eine Windung (36) der jeweiligen variablen Drossel (22) fließenden Stroms (I) erzeugt ist, und
wobei die Funktionsstromrichtungen (R_{F}) der beiden variablen Drosseln (22) gegenläufig sind.

2. Schutzvorrichtung nach Anspruch 1, **dadurch gekennzeichnet, dass** der weichmagnetische Teil (40) jeder der zwei variablen Drosseln (22) einen Windungsabschnitt (38) aufweist, der innerhalb der wenigstens einen Windung (36) angeordnet ist, wobei der Quellmagnet (42) derart ausgebildet ist, dass er den Windungsabschnitt (38) vormagnetisiert, insbesondere bis zur magnetischen Sättigung vormagnetisiert.

3. Schutzvorrichtung nach Anspruch 1 oder 2, **dadurch gekennzeichnet, dass** für jede der zwei variablen Drosseln (22) die Vormagnetisierungsrichtung (M_{V}) innerhalb des Windungsabschnittes (38) entgegen der Strommagnetfeldrichtung (Ms) verläuft.

4. Schutzvorrichtung nach einem der vorhergehenden Ansprüche, **dadurch gekennzeichnet, dass** jede der zwei variablen Drosseln (22) eine vorbestimmte Schwellstromstärke (Is) eines Stroms (I) durch die wenigstens eine Windung (36), insbesondere in Funktionsstromrichtung (R_{F}) hat, wobei der Quellmagnet (42) derart ausgebildet ist, dass die Vormagnetisierung (M_{V}) des weichmagnetischen Teils (40), insbesondere des Windungsabschnittes (38), gleich einem Strommagnetfeld innerhalb der wenigstens einen Windung (36) ist, das von einem durch die wenigstens eine Windung (36) mit der Schwellstromstärke (I_{S}) fließenden Stroms (I) erzeugt wird.

5. Schutzvorrichtung nach einem der vorhergehenden Ansprüche, **dadurch gekennzeichnet, dass** jeder der zwei variablen Drosseln (22) eine vorbestimmte Maximalstromstärke (I_{M}) eines Stroms (I) durch die wenigstens eine Windung (36), insbesondere in Funktionsstromrichtung (R_{F}) hat, wobei der Quellmagnet (42) derart ausgebildet ist, dass er einem Maximalmagnetfeld am Quellmagnet (42) standhält, das von einem durch die wenigstens eine Windung (36) mit der Maximalstromstärke (I_{M}) fließenden Strom (I) erzeugt wird.

6. Schutzvorrichtung nach einem der vorhergehenden Ansprüche, **dadurch gekennzeichnet, dass** der weichmagnetische Teil (40) jeder der zwei variablen Drosseln (22) aus einem weichmagnetischen Material, insbesondere aus Elektroblech, Ferrit, amorphem Eisen und/oder nanokristallinem Eisen ist.

7. Schutzvorrichtung nach einem der vorhergehenden Ansprüche, **dadurch gekennzeichnet, dass** der Quellmagnet (42) jeder der zwei variablen Drosseln (22) ein Permanentmagnet aus magnetisiertem hartmagnetischem Material ist, insbesondere ein Stahlmagnet, ein Ferritmagnet, ein Alnico-Magnet, ein Samarium-Cobalt-Magnet und/oder ein Neodym-Eisen-Bor-Magnet ist.

8. Schutzvorrichtung nach einem der vorhergehenden Ansprüche, **dadurch gekennzeichnet, dass** der Kern (32) jeder der zwei variablen Drosseln (22) eine Ringform aufweist, insbesondere wobei die wenigstens eine Windung (36) und der wenigstens eine Quellmagnet (42) entgegengesetzt zueinander angeordnet sind.

9. Schutzvorrichtung nach einem der vorhergehenden Ansprüche, **dadurch gekennzeichnet, dass** der weichmagnetische Teil (40) jeder der zwei variablen Drosseln (22) wenigstens einen Luftspalt (44) aufweist, wobei der Quellmagnet (42) im Luftspalt (44) angeordnet ist, und/oder dass der Quellmagnet (42) außen um einen Quellabschnitt (50) des weichmagnetischen Teils (40) angeordnet ist.

10. Schutzvorrichtung nach einem der vorhergehenden Ansprüche, **dadurch gekennzeichnet, dass** der Kern (32) jeder der zwei variablen Drosseln (22) einen Bypass (46) aufweist, insbesondere wobei im Bypass (46) ein Luftspalt (48) vorgesehen ist.

11. Schutzvorrichtung nach einem der vorhergehenden Ansprüche, **dadurch gekennzeichnet, dass** die Schutzvorrichtung (16) auch eine Kurzschlussschutzvorrichtung (18) ist, die eine Trenneinheit (20), insbesondere eine leistungselektronische Trenneinheit (20) aufweist, die in Reihe mit den zwei variablen Drosseln (22) geschaltet ist.

## Claims

1. A protective device for an electrical grid (10), comprising at least one variable choke (22) which includes a conductor (34) having at least one turn (36) and a core (32) which is arranged at least in sections within the at least one turn (36),
the core (32) including a magnetically soft part (40) and at least one source magnet (42),
the source magnet (42) being configured such that it biases the magnetically soft part (40) in a bias direction (M_{V}),
the protective device (16) being an overvoltage protective device (52) which includes a coarse protection means (54) and a fine protection means (56), and
the variable choke (22) being arranged between the coarse protection means (54) and the fine protection means (56), **characterized in that**
the protective device (16) includes two variable chokes (22),
wherein each of the two variable chokes (22) has an intended functional current direction (R_{F}) of a current (I) through the conductor (34) of the respective variable choke (22),
wherein the source magnet (42) of the respective variable choke (22) is arranged such that the bias direction (Mv) runs opposite a current magnetic field direction (M_{S}),
wherein the current magnetic field direction (M_{S}) is the direction of a current magnetic field that is generated by a current (I) flowing in the functional current direction (R_{F}) through the at least one turn (36) of the respective variable choke (22), and
wherein the functional current directions (R_{F}) of the two variable chokes (22) are opposed.

2. The protective device according to claim 1, **characterized in that** the magnetically soft part (40) of each of the two variable chokes (22) includes a turn section (38) that is arranged within the at least one turn (36), the source magnet (42) being configured such that it biases the turn section (38), in particular biases it up to magnetic saturation.

3. The protective device according to claim 1 or 2, **characterized in that** for each of the two variable chokes (22), the biasing direction (Mv) within the turn section (38) runs opposite to the current magnetic field direction (Ms).

4. The protective device according to any of the preceding claims, **characterized in that** each of the two variable chokes (22) has a predetermined threshold current intensity (I_{S}) of a current (I) through the at least one turn (36), in particular in the functional current direction (R_{F}), wherein the source magnet (42) is configured such that the magnetic bias (M_{V}) of the magnetically soft part (40), in particular of the turn section (38), is equal to a current magnetic field within the at least one turn (36), which is generated by a current (I) flowing through the at least one turn (36) with the threshold current intensity (I_{S}).

5. The protective device according to any of the preceding claims, **characterized in that** each of the two variable chokes (22) has a predetermined maximum current intensity (I_{M}) of a current (I) through the at least one turn (36), in particular in the functional current direction (R_{F}), wherein the source magnet (42) is configured such that it withstands a maximum magnetic field at the source magnet (42), which is generated by a current (I) flowing through the at least one turn (36) with the maximum current intensity (I_{M}).

6. The protective device according to any of the preceding claims, **characterized in that** the magnetically soft part (40) of each of the two variable chokes (22) is made of a soft magnetic material, in particular of electrical sheet steel, ferrite, amorphous iron and/or nanocrystalline iron.

7. The protective device according to any of the preceding claims, **characterized in that** the source magnet (42) of each of the two variable chokes (22) is a permanent magnet made of magnetized hard magnetic material, in particular a steel magnet, a ferrite magnet, an alnico magnet, a samarium-cobalt magnet and/or a neodymium-iron-boron magnet.

8. The protective device according to any of the preceding claims, **characterized in that** the core (32) of each of the two variable chokes (22) has a ring shape, in particular wherein the at least one turn (36) and the at least one source magnet (42) are arranged opposite to each other.

9. The protective device according to any of the preceding claims, **characterized in that** the magnetically soft part (40) of each of the two variable chokes (22) has at least one air gap (44), the source magnet (42) being arranged in the air gap (44), and/or **in that** the source magnet (42) is arranged on the outside around a source section (50) of the magnetically soft part (40).

10. The protective device according to any of the preceding claims, **characterized in that** the core (32) of each of the two variable chokes (22) includes a bypass (46), in particular wherein an air gap (48) is provided in the bypass (46).

11. The protective device according to any of the preceding claims, **characterized in that** the protective device (16) is also a short-circuit protection device (18) which includes a disconnection unit (20), in particular a power electronic disconnection unit (20), which is connected in series with the two variable chokes (22).

## Revendications

1. Dispositif de protection pour un réseau électrique (10), comprenant au moins une bobine d'arrêt variable (22) qui présente un conducteur (34) présentant au moins une spire (36) et un noyau (32) qui est agencé, au moins par tronçons, à l'intérieur de ladite au moins une spire (36),
le noyau (32) présentant une partie magnétique douce (40) et au moins un aimant source (42),
l'aimant source (42) étant réalisé de manière à prémagnétiser la partie magnétique douce (40) dans un sens de prémagnétisation (Mv),
le dispositif de protection (16) étant un dispositif de protection contre les surtensions (52) qui présente une protection grossière (54) et une protection fine (56), et
la bobine d'arrêt variable (22) étant agencée entre la protection grossière (54) et la protection fine (56), **caractérisé en ce que**
le dispositif de protection (16) présente deux bobines d'arrêt variables (22),
chacune des deux bobines d'arrêt variables (22) présentant un sens de courant fonctionnel prévu (R_{F}) d'un courant (I) à travers le conducteur (34) de la bobine d'arrêt variable respective (22),
l'aimant source (42) de la bobine d'arrêt variable respective (22) étant agencé de telle sorte que le sens de prémagnétisation (M_{V}) est opposé à un sens de champ magnétique de courant (M_{S}),
le sens de champ magnétique de courant (Ms) étant le sens d'un champ magnétique de courant généré par un courant (I) circulant dans le sens de courant fonctionnel (R_{F}) à travers ladite au moins une spire (36) de la bobine d'arrêt variable respective (22), et
les sens de courant fonctionnel (R_{F}) des deux bobines d'arrêt variables (22) étant opposés.

2. Dispositif de protection selon la revendication 1, **caractérisé en ce que** la partie magnétique douce (40) de chacune des deux bobines d'arrêt variables (22) présente un tronçon de spire (38) qui est agencé à l'intérieur de ladite au moins une spire (36), l'aimant source (42) étant réalisé de manière à prémagnétiser le tronçon de spire (38), notamment jusqu'à saturation magnétique.

3. Dispositif de protection selon la revendication 1 ou 2, **caractérisé en ce que** pour chacune des deux bobines d'arrêt variables (22), le sens de prémagnétisation (Mv) à l'intérieur du tronçon de spire (38) est opposé au sens de champ magnétique de courant (Ms).

4. Dispositif de protection selon l'une des revendications précédentes, **caractérisé en ce que** chacune des deux bobines d'arrêt variables (22) présente une intensité de courant de seuil prédéterminée (I_{S}) d'un courant (I) à travers ladite au moins une spire (36), notamment dans le sens de courant fonctionnel (R_{F}), l'aimant source (42) étant réalisé de telle sorte que la prémagnétisation (M_{V}) de la partie magnétique douce (40), notamment du tronçon de spire (38), est égale à un champ magnétique de courant dans ladite au moins une spire (36), lequel est généré par un courant (I) circulant à travers ladite au moins une spire (36) avec l'intensité de courant de seuil (I_{S}).

5. Dispositif de protection selon l'une des revendications précédentes, **caractérisé en ce que** chacune des deux bobines d'arrêt variables (22) présente une intensité de courant maximale prédéterminée (I_{M}) d'un courant (I) à travers ladite au moins une spire (36), notamment dans le sens de courant fonctionnel (R_{F}), l'aimant source (42) étant réalisé de manière à résister à un champ magnétique maximal au niveau de l'aimant source (42), lequel est généré par un courant (I) circulant à travers ladite au moins une spire (36) avec l'intensité de courant maximale (I_{M}).

6. Dispositif de protection selon l'une des revendications précédentes, **caractérisé en ce que** la partie magnétique douce (40) de chacune des deux bobines d'arrêt variables (22) est en matériau magnétique doux, en particulier en tôle électrique, en ferrite, en fer amorphe et/ou en fer nanocristallin.

7. Dispositif de protection selon l'une des revendications précédentes, **caractérisé en ce que** l'aimant source (42) de chacune des deux bobines d'arrêt variables (22) est un aimant permanent en matériau magnétique dur magnétisé, en particulier un aimant en acier, un aiment en ferrite, un aimant en Alnico, un aiment en samarium-cobalt et/ou un aimant en néodyme-fer-bore.

8. Dispositif de protection selon l'une des revendications précédentes, **caractérisé en ce que** le noyau (32) de chacune des deux bobines d'arrêt variables (22) présente une forme annulaire, ladite au moins une spire (36) et ledit au moins un aimant source (42) étant en particulier agencés opposés l'une à l'autre.

9. Dispositif de protection selon l'une des revendications précédentes, **caractérisé en ce que** la partie magnétique douce (40) de chacune des deux bobines d'arrêt variables (22) présente au moins un entrefer (44), l'aimant source (42) étant agencé dans l'entrefer (44), et/ou **en ce que** l'aimant source (42) est agencé à l'extérieur autour d'un tronçon source (50) de la partie magnétique douce (40).

10. Dispositif de protection selon l'une des revendications précédentes, **caractérisé en ce que** le noyau (32) de chacune des deux bobines d'arrêt variables (22) présente une dérivation (46), un entrefer (48) étant en particulier prévu dans la dérivation (46).

11. Dispositif de protection selon l'une des revendications précédentes, **caractérisé en ce que** le dispositif de protection (16) est également un dispositif de protection contre les courts-circuits (18) présentant une unité de déconnexion (20), en particulier une unité de déconnexion à électronique de puissance (20) agencée en série avec les deux bobines d'arrêt variables (22).
